# EUROPEAN PATENT APPLICATION

(11) **EP 2 447 888 A1**
(43) Date of publication of application: **02.05.2012**
(21) Application number: 11185346.1
(22) Date of filing: 14.10.2011
(51) Int. Cl.: G06N 7/00, G06F 11/07

(54) **System and method for determining fault diagnosability of a health monitoring system**

(30) Priority: 27.10.2010 US 913387
(71) Applicant: Honeywell International Inc., NJ 07962-2245 (US)
(72) Inventor: Bock, Joel, Morristown, NJ 07962-2245 (US); Maewal, Akhilesh, Morristown, NJ 07962-2245 (US); Eidson, Tony, Morristown, NJ 07962-2245 (US)
(74) Representative: Buckley, Guy Julian

(57) **Abstract**

Methods and apparatus are provided for determining the fault diagnosability of a health monitoring software application for a complex system. The method includes extracting data from the software application containing a relationship between one or more failure modes of the complex system and one or more evidence items of the complex system, the a priori probabilities of each failure mode occurring, and the a priori probability of each evidence item occurring. The method also includes creating one or more matrices relating the one or more FMs to the one or more evidence items. The method further includes analyzing the one or more matrices and the a priori probabilities to determine the diagnosability of each FM.

## Description

### TECHNICAL FIELD

The present invention generally relates to model based diagnostic systems. The present invention more particularly relates to systems and methods for determining the extent to which a diagnostics model of a complex system is able to provide sufficient information to uniquely identify a fault based on observed symptoms and to then to provide information to optimize the model.

### BACKGROUND

Man has yet to invent a complex system that can function throughout its designed useful life without some kind of maintenance or repair being performed. In fact, the lack of reasonable routine maintenance or repair will shorten the useful life of any asset, particularly for complex systems such as aircraft and manufacturing systems.

Complex systems may comprise a large number of connected components and subsystems, each of which is subject to faults or failure during operation. These faults may be known as failure modes ("FM"). Often FMs are disguised or concealed by other associated FMs, symptoms or damage, thereby prohibiting accurate determination of the root cause of the failed component or subsystem. Such related FMs may be referred to as an ambiguity group. Hence the identification of a causal FM may be based upon information derived from a variety of sensor measurements, built-in-tests ("BIT"), isolation procedures, human observation and/or other evidence. An ambiguity group is defined herein as a collection of FMs for which diagnostics can detect a complex system failure and can isolate the failure to that collection of FMs, yet cannot further isolate the failure to any subset of the collection of the FMs. The term diagnostics refers herein to a monitor module, a BIT, a manually executed test or observation and is synonymous with the term "evidence, " which also includes monitoring devices, BITs, manually executed tests and human observation.

There are a number of isolation procedures that may be applied to disambiguate and to isolate the FM, and then to narrow repair options down to a finite group of corrective actions ("CA"). Or conversely, to establish that the group of CAs will not fix the FM. A CA may include either an isolation procedure or a repair procedure. Each isolation procedure and each related repair procedure have an estimated execution time cost and a material cost necessary to complete the isolation procedure or the repair procedure.

With complex systems, such as aircraft, an equipment casualty may have a number of potential FM's that could be the underlying cause of the casualty. Each FM may have a particular probability of being the cause of the casualty. As a non-limiting example, an inoperative radio casualty may be caused by three probable FMs: a lack of electric power, a faulty circuit board or maybe a faulty squelch switch. Each FM may have an expected or an a priori probability of causing that particular casualty. The a priori probabilities of causing a particular casualty may be determined over time by testing or by historical performance and may be stored in a database for later use.

For many complex systems stand alone monitors, BITs, CAs, and other diagnostic evidence are not sufficient to disambiguate various failure modes. For this reason a diagnostic model of the complex system is often used to represent known associations between various measurements and failure modes. These models implicitly associate failure modes to monitoring points in the complex system, thereby creating indirect evidence to more specifically identify the causal FM.

Diagnostic models contain large amounts of data. However, when used in isolation such models tend to produce ambiguous or incomplete diagnostic information. Extracting requisite information from the model from which to initiate the appropriate CA is difficult in most practical cases. Further, complications arise when multiple FMs may be concurrently active within an ambiguity group. The isolation of the detected failures across all potential FM combinations and permutations produces repair uncertainty and increases time and material cost. It is often observed that incorrect maintenance actions, upon occasion, introduce new FMs.

The quality of the complex system model used to develop the heath maintenance system (HMS) for the complex system has a significant impact on maintenance cost. An indicative measure of the quality of the complex system model may be its "diagnosability." Diagnosability is used herein below to describe the extent to which the complex system model is able to reduce evidential ambiguities and thereby provide sufficient information to uniquely identify a FM on the basis of observed symptoms. A FM is diagnosable if there exists a set of diagnostic indicators (i.e. evidence) that when present, unambiguously indict it as the cause of a casualty

Accordingly, it is desirable to minimize the cost of maintenance and improve the maintenance quality by optimizing the number of sensors within the complex system required to monitor the entire complex system without adversely impacting the probability of detection of a FM. To support such a goal, it is also desirable to be able to efficiently analyze computer models of complex system models to determine, and then maximize, the diagnosability of the model Furthermore, other desirable features and characteristics of the present invention will become apparent from the subsequent detailed description of the invention and the appended claims, taken in conjunction with the accompanying drawings and this background of the invention.

### BRIEF SUMMARY

A method is provided for determining fault diagnosability of a health monitoring software application for a complex system. The method comprises extracting data from the software application, the data containing a relationship between one or more failure modes (FM) of the complex system and one or more evidence items of the complex system, the a priori probabilities of each failure mode occurring, and the a priori probability of each evidence item occurring. The method also includes creating one or more matrices relating the one or more FMs to the one or more evidence items and analyzing the one or more matrices, the a priori probabilities of each failure mode occurring, and the a priori probability of each evidence item occurring to determine the diagnosability of each FM. The analysis includes determining the diagnosability of each FM that cannot be indicated by one of the plurality of evidence items, each FM that share an identical evidence signature with another FM, each FM with a unique evidence signature, and determining the a posteriori probability for each FM that it is active given a related set of evidence items.

An apparatus is provided for determining fault diagnosability of a health monitoring software application for a complex system. The apparatus comprises a data storage device containing a model of a complex system recorded therein and a computing device configured to analyze the model of the complex system by executing a plurality of instructions. The executable instructions include extracting data from the model of the complex system, the data containing a relationship between one or more failure modes (FM) of the complex system and one or more evidence items of the complex system, the a priori probabilities of each failure mode occurring, and the a priori probability of each evidence item occurring and creating one or more matrices relating the one or more FMs to the one or more evidence items. The executable instructions also include analyzing the one or more matrices, the a priori probabilities of each failure mode occurring, and the a priori probability of each evidence item conditional on the existence of each FM to compute the diagnosability of each FM.

### BRIEF DESCRIPTION OF THE DRAWINGS

The present invention will hereinafter be described in conjunction with the following drawing figures, wherein like numerals denote like elements, and

FIG. 1 is an abstract depiction of an embodiment as described herein;

FIG. 2 is a logic flow diagram of an embodiment;

FIG. 3 is a logic diagram of an exemplary relationship between failure modes and failure monitors;

FIG. 4 is another logic diagram of an exemplary relationship between failure modes and failure monitors;

FIG. 5 is another logic diagram of an exemplary relationship between failure modes and their related failure monitors and isolation tests;

FIG. 6 is an expanded logic flow diagram illustrating subroutine 220 of FIG. 2;

FIG. 7 is a continuation of the expanded logic flow diagram illustrating subroutine 220 of FIG. 2;

FIG. 8 is a continuation of the expanded logic flow diagram illustrating subroutine 220 of FIG. 2;

FIGs. 9A and 9B are further continuations of the expanded logic flow diagram illustrating subroutine 220 of FIG. 2;

FIG. 10 is an expanded logic flow diagram of illustrating subroutine 245 of FIG. 2.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Further, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

Furthermore, the term "complex system" is intended to be broadly interpreted and should not be construed to conventional mechanical devices, although such devices and systems may, of course, be evaluated and serviced by the methods and systems described herein. The term should be understood to include any complex system of components, functions, modules, subsystems, field replaceable units, both stationary and mobile, and supported in hardware, software, firmware, or in any other manner. A complex system may also be any aircraft, ground vehicle or water borne craft. A complex system may also be a manufacturing, chemical plant or the like.

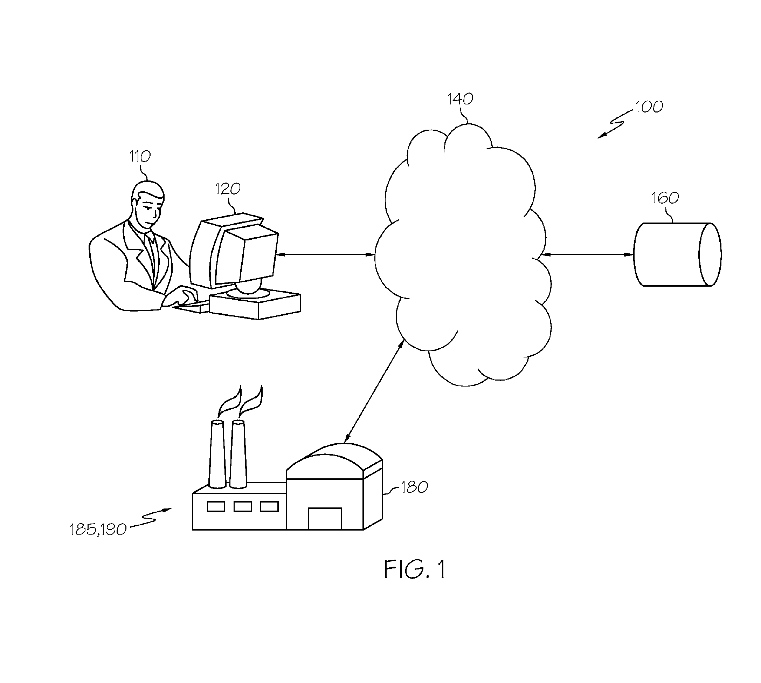

FIG. 1 is a functional block diagram of a system 100 that may execute the exemplary embodiments disclosed herein below. The system may include a computing device 120 being operated by a system user 110. The computing device may be any suitable computing device known in the art and may be a general purpose or a special purpose computing device. The computing device 120 may be in operable communication with a database 160 and a complex system 180 via an optional communication network 140. The communication network 140 may be any suitable communications network known in the art, which may include a wireless network or a wired network utilizing any suitable communications protocol.

The complex system 180 may be any complex system that comprises one or more sensors (not shown), built in testing equipment (BIT) or other diagnostic devices that may be known in the art to be suitable for monitoring a particular complex system or a subsystem thereof. The sensors or other monitoring devices are examples of monitoring modules 185. Non-limiting examples of monitoring modules may include, temperature sensors, pressure sensors, accelerometers, vibration detectors, microphones, light detectors, cameras, and any other suitable sensor currently in existence or that may exist in the future. An indicating module 190 is a broader term that may include a monitoring module, built in test equipment (BIT) and automated user-initiated test procedures.

Database 160 may be any suitable database known in the art. The database 160 may contain one or more computerized models of the complex system(s) 180 or subsystems thereof. Those of ordinary skill in the art will appreciate that the database 160 may reside on any suitable persistent or non-persistent memory device known in the art that may reside on the communication network 140 or may reside within the computing device 120.

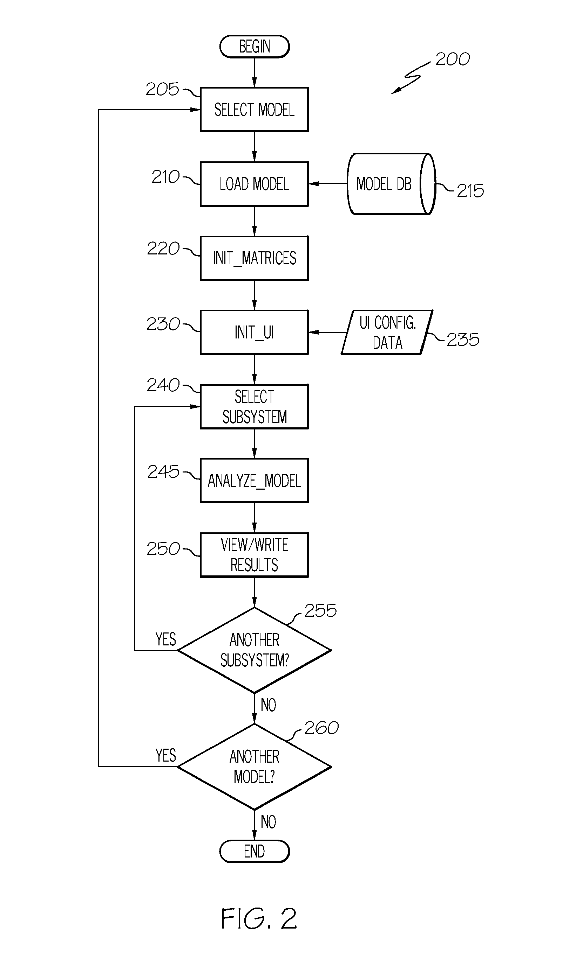

FIG. 2 is a high level logic flow diagram of an embodiment of a method 200 being disclosed herein. At process 205, a computer model to be analyzed is chosen by a system user 110. At process 210, the computer model to be analyzed is loaded from database 215.

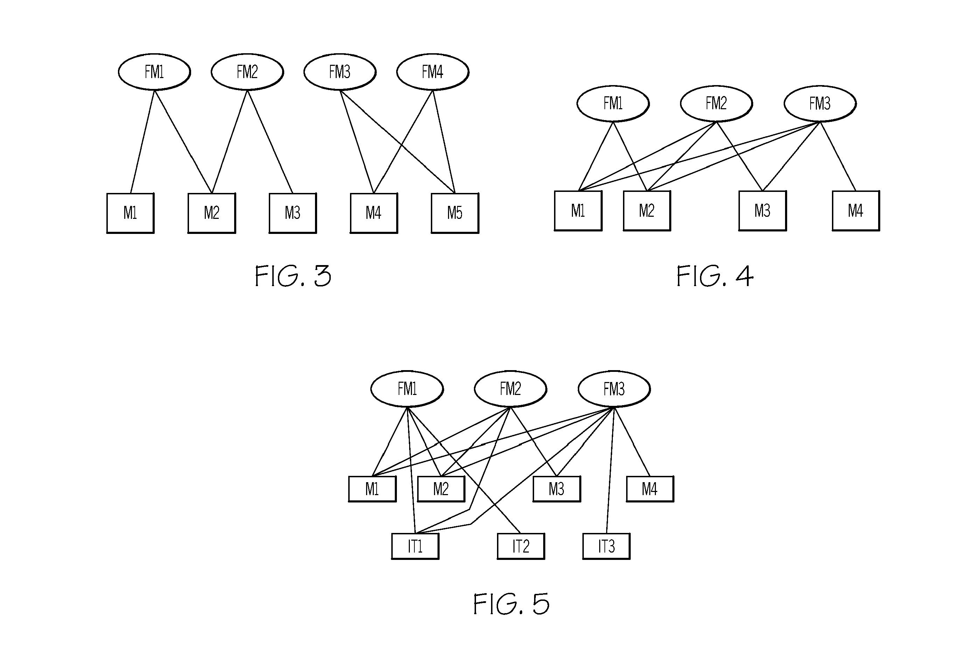

At process 220, various data matrices that relate an FM of the complex system 180 to one or more monitors and CAs for an FM are created and populated. The matrices are populated by mining data concerning the number and type of evidence items that are used in monitoring the complex system 180 as well as which subsystem or device of the complex system 180 is being monitored. These evidence items would include data from sensors, built in tests (BITs), diagnostic devices, manual inspections, or any diagnostic queries to an operator that that may be coded into the model (see FIG. 3). It will be appreciated by those of ordinary skill in the art that the number and complexity of matrices that may be created from a given model will vary. As such, only simplified examples will be disclosed herein in the interest of clarity and brevity.

At process 230, a user interface ("UI") is initiated using UI configuration data 235 that may be stored in a memory location, as may be known in the art. The memory location may reside in a local memory device or it may be located on the communication network 140.

At process 240, the system user 110 is prompted to select a subsystem of the complex system 180 for analysis. This option may presented in the form of a drop down menu, a directory tree or other displayable data structure that may be constructed during the data mining processes that are undertaken in process 220. In the alternative, the user may be given an option to analyze all subsystems of the complex system 180.

At process 245, the selected subsystem is analyzed for diagnosability. In general, this analysis is accomplished by associating the various monitors that exist for the complex system 180 with the various FMs that those monitors are designed to detect and then determining which failure modes will be identified with certainty and which will be indicted as having residual ambiguity. Any residual ambiguity indicates that additional monitors may need to be added or other investigation accomplished to remove the ambiguity. Conversely, it may be indicated that there is an unnecessary redundancy of monitors that are configures to detect the same FM.

At process 250, the results of the analysis are formatted and presented to the system user 110 for review. At decision point 255 a determination is made whether or not another subsystem is to be analyzed. If another subsystem is to be analyzed then the method 200 returns to process 240. If not, the process proceeds to decision point 260 where it is determined if another model for a health maintenance system is to be analyzed. If another model of an HMS is to be analyzed, then the method proceeds to process 205. If not, the method 200 ends.

As presented in FIG. 3, various relationships may exist between specific FMs and specific indicating modules 190. Table 1 is a simplified depiction of the relationship between several FMs and several evidence items (e.g. monitors) as illustrated in FIG. 3. In Table 1, relationships are represented by a "1" and a lack of a relationship is represented by a "0".

**Table 1: Failure Modes versus Monitors Matrix**

| | FM1 | FM2 | FM3 | FM4 |
|---|---|---|---|---|
| M1 | 1 | 0 | 0 | 0 |
| M2 | 1 | 1 | 0 | 0 |
| M3 | 0 | 1 | 0 | 0 |
| M4 | 0 | 0 | 1 | 1 |
| M5 | 0 | 0 | 1 | 1 |

As can be logically derived from Table 1, when certain subsets sets of monitors are active, their associated FMs may be detected as being present with certainty or with ambiguity under a single FM assumption. Various combinations and permutations of monitor evidence from Table 1 are presented in Table 2.

**Table 2 Failure Modes/Ambiguity Outcomes**

| | Failure Detection | Indicated FM | Ambiguity |
|---|---|---|---|
| 1. | {M1} | {FM1} | No Ambiguity |
| 2. | {M1, M2} | {FM1} | No Ambiguity |
| 3. | {M1, M2, M3} | {FM1, FM2} | Ambiguity |
| 4. | {M1, M2, M3, M4} | {ALL} | Ambiguity |
| 5. | {M1, M2, M3, M4, M5} | {ALL} | Ambiguity |
| 6. | {M1, M3} | {FM1, FM2} | Ambiguity |
| 7. | {M1, M3, M4} | {FM1, FM4} | Ambiguity |
| 8. | {M1, M3, M4, M5} | {ALL} | Ambiguity |
| 9. | {M1, M4} | {FM1, FM3, FM4} | Ambiguity |
| 10. | {M1, M4, M5} | {FM1, FM3, FM4} | Ambiguity |
| 11. | {M1, M5} | FM1, FM3, FM4} | Ambiguity |
| 12. | {M2} | {FM1, FM2} | Ambiguity |
| 13. | {M2, M3} | {FM2} | No Ambiguity |
| 14. | {M2, M3, M4} | {ALL} | Ambiguity |
| 15. | {M2, M3, M4, M5} | {ALL} | Ambiguity |
| 16. | {M2, M4} | {ALL} | Ambiguity |
| 17. | {M2, M4, M5} | {ALL} | Ambiguity |
| 18. | {M2, M5} | {ALL} | Ambiguity |
| 19. | {M3} | {FM2} | No Ambiguity |
| 20. | {M3, M4} | {FM2, FM3, FM4} | Ambiguity |
| 21. | {M3, M4, M5} | {FM2, FM3, FM4} | Ambiguity |
| 22. | {M3, M5} | {FM2, FM3, FM4} | Ambiguity |
| 23. | {M4} | {FM3, FM4} | Ambiguity |
| 24. | {M4, M5} | {FM3, FM4} | Ambiguity |
| 25. | {M5} | {FM3, FM4} | Ambiguity |

From Table 2, if only monitor M1 detects a failure, the cause of the failure must be FM1 with certainty because monitor M2 does not register a failure. As such, FM2 cannot be indicted as the cause of the failure.

The same may be said in the case where both monitors M1 and M2 detect a failure. Because both M1 and M2 monitor for FM1 and M3 has not detected a failure, FM2 cannot be indicted as a cause of the failure. As such, the cause of the failure is again FM1 with certainty.

Conversely, if M1, M2 and M3 all indicate a failure, the cause of the failure may be FM1, FM2 or both FM1 and FM2. As such, the cause of the failure has been narrowed but is still ambiguous. This situation indicates that additional monitors or other additional evidence must to be added to the diagnostics system of the complex system 180 to remove the ambiguity.

Further, by creating and analyzing the matrix, the number of monitor modules 185 looking at each specific FM may be determined along with the relationship between the various FMs and the level of ambiguity that this set of indicating modules 190 imposes. In the present example of FIG. 3, it may be deduced that if two or more FMs have the same column representation (i.e. identical evidence signatures), then the diagnosability of that particular set of indicating modules 190 is inherently ambiguous. Therefore, further investigation or additional indicating modules 190 are needed. This situation is illustrated in FIG. 3 where the evidence signatures in Table 1 for FM3 and FM4 are identical (0,0,0,1,1). As such, it is readily discernable that there is an inherent ambiguity built into the array of monitors associated with FM3 and FM4.

In situations where the diagnosability is inherently ambiguous, an additional indicating module 190 may be employed. An indicating module may be another monitoring module 185; it may be a BIT or an operator initiated test, either manually or remotely initiated.

Table 3 is a simplified depiction of a FM matrix corresponding to FIG. 4. As can be seen, FIG. 4 illustrates three FMs and four monitoring module 185 yielding three different evidence signatures for FM1-FM3. Under a single fault assumption analysis, each evidence signature is unique because monitor modules 3 and 4 do not indict a FM. The lack of a fault indication from monitor modules 3 and/or 4 uniquely differentiates FM1 from FM2.

**Table 3**

| | FM1 | FM2 | FM3 |
|---|---|---|---|
| M1 | 1 | 1 | 1 |
| M2 | 1 | 1 | 1 |
| M3 | 0 | 1 | 1 |
| M4 | 0 | 0 | 1 |

Under a multiple fault assumption analysis, the evidence signature is not unique. Under a multiple fault assumption where only monitor modules M1 and M2 indict a particular FM, the lack of an FM registering on monitor modules M3 and M4 unambiguously indicates that the casualty was caused by FM1. However, if the evidence signature (1,1,1,0) registers, the cause of the fault may be FM2. But FM2 may also be masking the occurrence of FM1 as well because the evidence signature of FM1 is a subset of FM2. Similarly, the evidence signature for FM3 (1,1,1,1) may mask FM1 and/or FM2 as an additional cause of the casualty. To cure these ambiguities another monitor may be added to indicate only when FM1 occurs. Alternatively a BIT or a manually initiated CA may be performed to clear the ambiguity. In other words, if an evidence signature of a particular FM is a superset of an evidence signature for another FM, a test of the other FM(s) must be accomplished to clear the ambiguity.

Table 4 is a simplified FM matrix corresponding to FIG. 5. As can be seen, FIG. 5 illustrates the three FMs and four monitoring module 185 yielding the three different evidence signatures for FM1-FM3 as presented above in Table 3. However, three maintenance tests (T1-T3) have been added for disambiguation purposes. These tests may be automated or performed remotely by a BIT or performed manually by a technician. For a given test procedure T(i) where the test procedure is indicative of one failure mode and not another, then the test procedure disambiguates and indicts a particular FM as the cause of the complex system casualty. For example, T2 indicts only FM1. Similarly, T3 indicts FM2. However, T1 indicts all of FM1-FM3 and is essentially useless in this context and may be removed from the complex system 180.

**Table 4: Failure Modes versus Monitors/Tests Matrix**

| | FM1 | FM2 | FM3 |
|---|---|---|---|
| M1 | 1 | 1 | 1 |
| M2 | 1 | 1 | 1 |
| M3 | 0 | 1 | 1 |
| M4 | 0 | 0 | 1 |
| T1 | 1 | 1 | 1 |
| T2 | 1 | 0 | 0 |
| T3 | 0 | 1 | 0 |

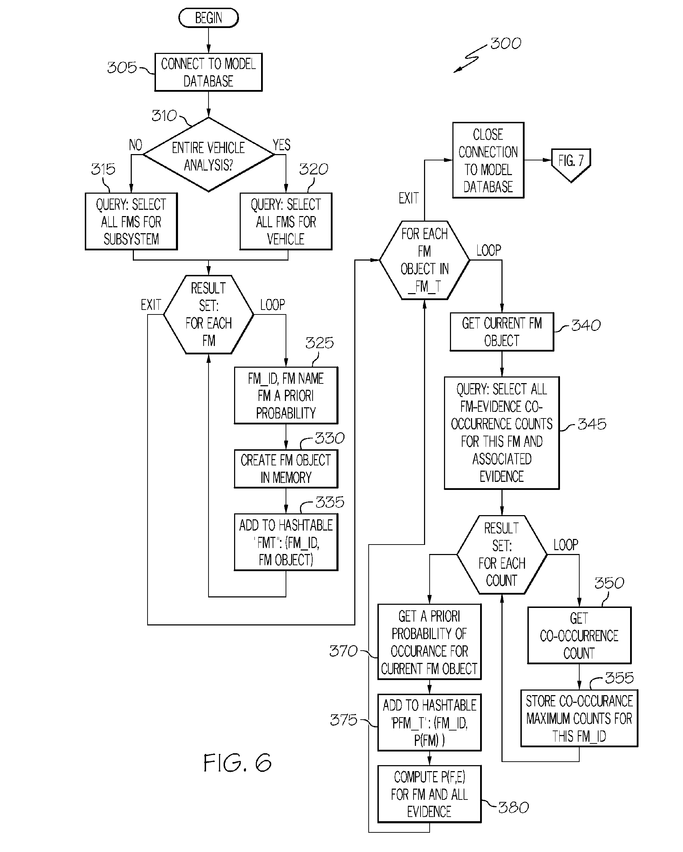

FIG. 6 is a detailed logic flow diagram of the subroutine 300 of process 220. Process 220 initializes a number of convenience hash tables (e.g. "FmT, pFM_T"). A "convenience hash table" or a "convenience matrix" are referred to herein as intermediate data structures configured to store data that is to be used in follow on determinations. Convenience hash tables and convenience matrices hold intermediately calculated data thereby reducing computing overhead by eliminating the need to retrieve data from the source location and recalculating.

At process 305, computing device 120 connects to the HMS database. The complex model database may be database 160 or may be a software object resident in database 160. At process 310, a system user input is queried as to whether the health maintenance system for the entire complex system is to be analyzed or a whether a specific subsystem is to be analyzed. The response will determine whether determination point 255 of FIG. 2 is executed or not.

At process 325-335, a loop is entered which examines the various data structures resident with the HMS software of the complex system 180 for data related to all of the FMs that may be identified in the HMS software. The location and format of the data structures containing the FM records are assumed herein to be known to the computing device 120. This is so because the user of the system 100 has provided that particular information to the computing device 120 during the configuration of the computing device. Configuration of a software system is well known in the art and will not be further discussed herein in the interest of brevity.

At process 325, the FM name (i.e. FM_ID) and a priori probability of the FM occurring is retrieved for a first FM. The term "a priori" means knowledge encoded within the model prior to the deployment of HMS, and does not include any data information gathered by the HMS during the operation of the physical system being monitored. At process 330, a FM software object is created in memory and stored in a hash table "fm_T" or other suitably initialized data structure. More specifically, a hash table is a data structure that uses a hash function to map identifying values, known as keys (e.g. FM_ID), to their associated values. The hash function is used to transform the key into the index of an array element where the corresponding value is to be sought.

When the hash table fm_T is completed, a second loop is entered by which all of the historic co-occurent evidence for each FM in the hash table is determined from the HMS and is used to populate the convenience hash table pFM_T. Hash table pFM_T contains the a priori probabilities for all FMs in the system or subsystem being analyzed. The term "co-occurrent evidence" may be defined as one or more phenomena that occur together to identify an event that has been be detected by a human or a device. From the hash table "fm_T", a first FM is selected at process 340 and any co-occurrent FM evidence for that FM is identified. At processes 350 and 355, a count of the co-occurrent evidence for each FM is determined.

When the maximum co-occurrence count is completed for the particular FM in the FM table FM_T, the a priori probability of occurrence for the current FM (P(FM)) is retrieved from hash table Fm_T at process 370 and stored in a new a priori hash table indexing the FM_ID with the probability of the FM occurring (P(FM)) at process 375. At process 380, the probability of the current FM being detected given the co-occurrence of all of the evidence items that may indict the FM as a causal FM and the a priori probability of an occurrence of the FM is calculated for the current FM. The loop 340-380 continues until all of the FMs in the hash table Fm_T have been processed.

At process 375, the co-occurrence count and the a priori probabilities of a particular FM occurring for each FM are used to create convenience hash table ("pFM_T") of a priori FM probabilities of a particular failure for the subsystem or the complex system as a whole. For example, for an illustrative FM1, each monitor, BIT, test procedure and human observation (i.e. evidence) is counted for FM1 and used to calculate the probability of FM occurring.

At process 380 the joint probability of failure (P(FMᵢ,Eᵢⱼ) is computed for a particular FMᵢ that is active (i.e. it is occurring) in light of the evidence (Eᵢⱼ) that has been received for the particular FMᵢ. The joint probability is calculated separately for each level (i.e. category) of evidence.

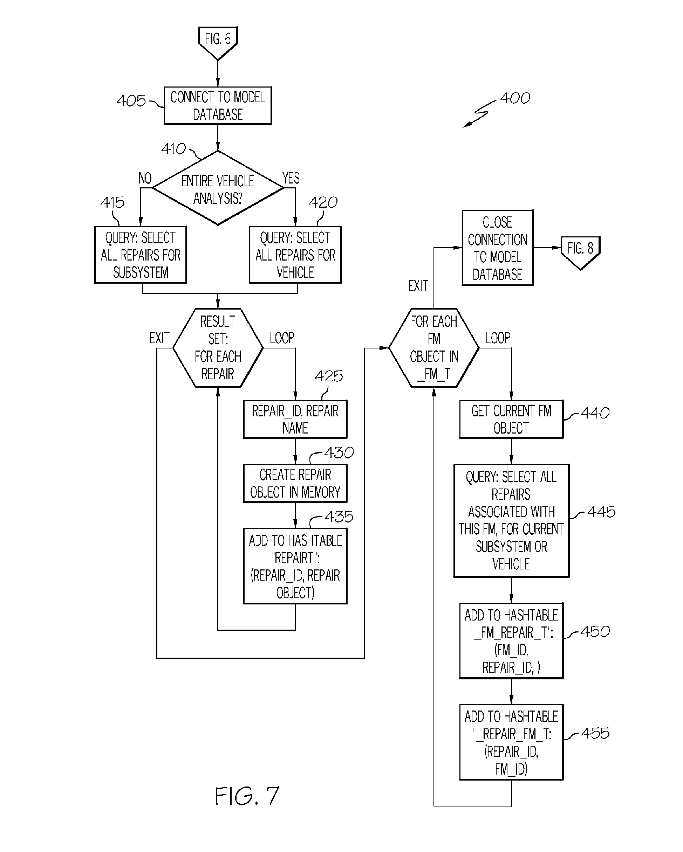

FIG. 7 is a logic flow diagram of the subroutine 400 of process 220. Sub-routine 400 retrieves the various repair action relationships that may be associated with a FM that may be recorded in the health maintenance system At process 405, computing device 120 connects to the complex model repair database. The complex model database may be database 160 or resident in database 160. At process 410, a system user is queried as to whether the HMS for the entire complex system is to be analyzed or a whether a specific subsystem is to be analyzed. The response will determine whether determination point 255 is executed or not at processes 415 and 420.

At process 425-435, a loop is entered which examines the HMS of the complex system for data related to all of the repair procedures that may be identified in the HMS software as being related to a particular FM. The location and format of the data structures containing the repair information are known to the computing device 120. This is so because the user of the system 100 has provided that particular information to the computing device 120 during configuration of the system 100.

At process 425, the repair name/ID is generated for each repair in memory. At process 430, a repair software object is created in memory and stored in a convenience hash table "repair_T" or other data structure at process 435. The hash table "repair_T" links the system or subsystem being analyzed to a list of repairs.

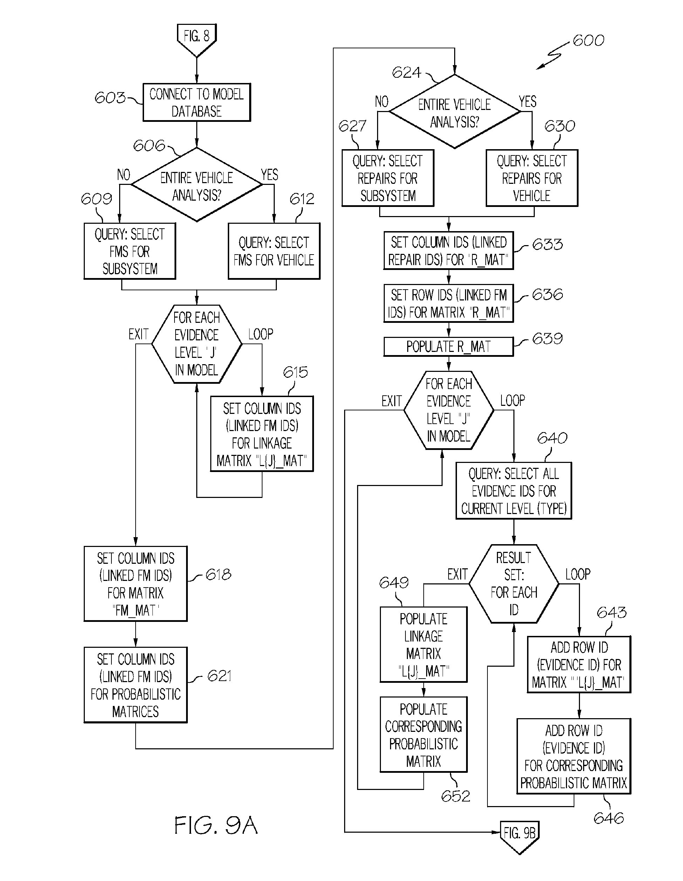

When the computing device 120 establishes the hash table "repair_T" containing all of the repairs that are stored within the HMS, a first FM is selected from the hash table at process 340 and all repair actions associated with that FM are identified from the hash table "repair_T" and suitably stored in two new hash tables "FM_repair" and "repair_FM." These hash tables relate each FM to its associated repair action and each repair action to its associated FM's, respectively. Because a particular repair may correct disparate FM's and a particular FM may be corrected by applying disparate corrective actions, the FM_repair and repair_FM hash tables provide different information. The hash tables are used to populate a final repair matrix "R_Mat" (see, FIGs. 9A-9B) and to provide data to perform various restore-to-run analyses.

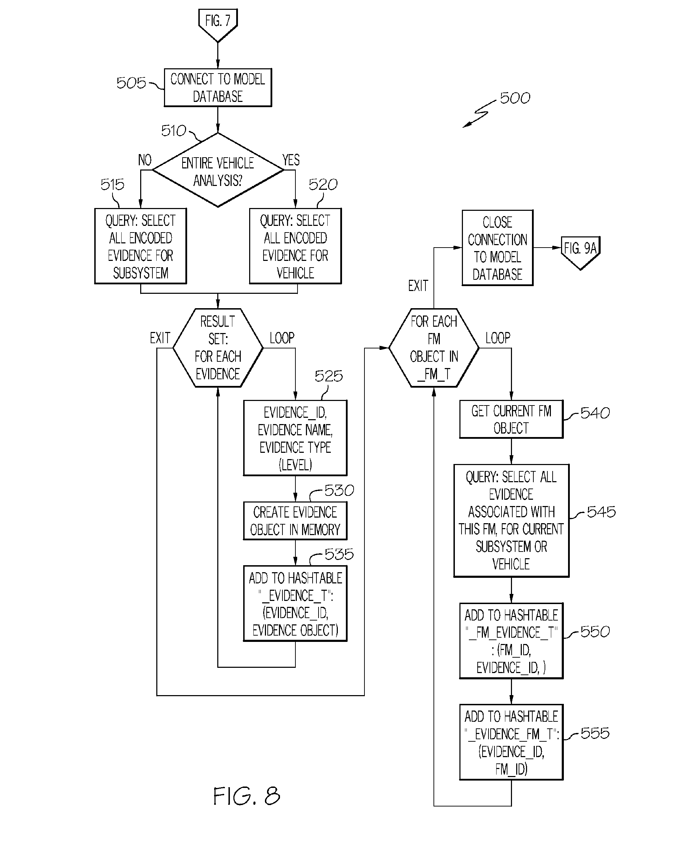

FIG. 8 is a logic flow diagram of the subroutine 500 of process 220. Sub-routine 500 retrieves the various evidence relationships that may be associated with a FM that may be recorded in the HMS. At process 505, computing device 120 connects to the complex model repair database. The complex model database may be database 160 or resident in database 160. At process 510, a system user is queried as to whether the health maintenance system for the entire complex system is to be analyzed or a whether a specific subsystem is to be analyzed. The response will determine whether determination point 255 is executed or not at processes 515 and 520.

At process 525-535, a loop is entered which examines the HMS of the complex system for data related to all of the evidence producing features in the HMS that may be identified as being related to an FM. The location and format of the data structures containing the evidence information are known to the computing device 120. This is so because the user 110 of the system 100 has provided that particular information to the computing device 120 during configuration.

At process 525, the evidence name/ID (e.g. monitor ID) is generated and an evidence record is created in a convenience hash table "evidence_T". At process 530, an evidence software object is created in memory and stored in the evidence hash table or other data structure at process 535. Hash table "evidence_T" links the system or subsystem being analyzed to all of the evidence items that may be comprised by the system or sub-system, were evidence includes all automatic monitoring devices, semi-automatic BIT, manual post mortem tests and human observations.

When the computing device 120 establishes the hash tables/matrices of all of the evidence items stored within the HMS, a first FM is selected at process 540 and all evidence items associated with that FM are retrieved from the evidence hash table at process 545. The information retrieved is then suitably stored in two new hash tables "FM_evidence" and "evidence_FM" at processes 550 and 555, respectively. These hash tables relate each FM to its associated evidence items and each evidence item to its associated FM's, respectively. Because a particular evidence source may indict disparate FM's and a particular FM may be indicted by disparate evidence, the FM_evidence and evidence_FM hash tables provide different information.

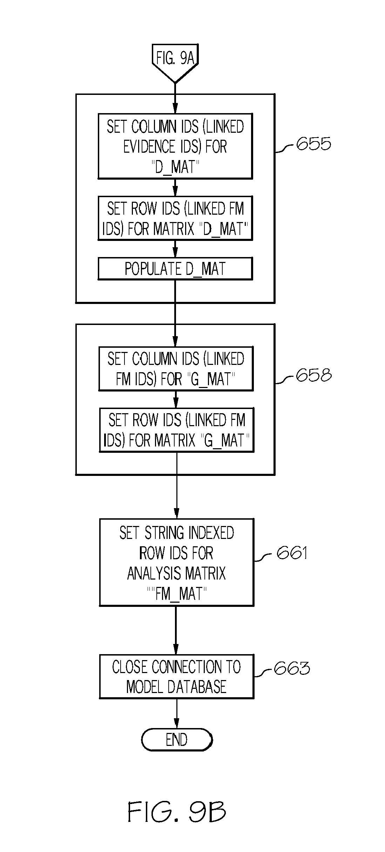

FIGs. 9A and 9B are a flow diagram of the subroutine 600 of process 220 which initializes various matrices. At process 603, computing device 120 connects to the complex model repair database. The complex model database may be database 160 or be resident in database 160. At process 606 and 624, a system user is queried as to whether the health maintenance system for the entire complex system is to be analyzed or a whether a specific subsystem is to be analyzed. The response will determine whether determination point 255 is executed or not at processes 609, 612, 627 and 630.

At process 615, a linkage matrix "L(j)_Mat" is created that links every FM retrieved from the HMS to each level of evidence 1-4, where the column headers are the FMs. At process 618 and 621, the same column headers are used to establish the failure mode matrix "FM_Mat" and one or more probabilistic matrices. There may be four probabilistic matrices "pFE_mMAT," "pFE_iMat," "pFE_fMat," "pFE_coMat" which represent the Bayesian probability of detecting a particular FM by a particular evidence source. Matrix "pFE_mMat" may associate level one evidence, such as a sensor or monitor device, with an FM. Matrix "pFE_iMat" may associate level two evidence, such as a BIT, with an FM. Matrix "pFE_fMat" may associate level three evidence, such as an offline manually initiated test, with an FM. Matrix "coMat" may associate level four evidence, such as an operator observation, with a FM.

There also may be four matrices initiated linking a probability of a false alarm for a particular FM given a particular level of evidence, "pFA_mMat," "pFA_itMat," "pFA_fMat," and "pFA_coMat". These false alarm matrices represent the probability of a failure mode being indicated by the evidence of a particular level, when in fact the FM is not present in the context of the evidence.

However, those of skill in the art will appreciate that the various forms of possible evidence may include other forms not listed herein or evidence categories may be combined or broken down into sub-categories. Hence the number and types of probabilistic matrices may vary for alternative but equivalent embodiments.

At process 633, repair matrix "R_Mat" is established where the column headers may be string labels and comprise all of the repairs obtained from the HMS during process 450 and 455. The row headers are added at process 636 and comprise the FMs obtained from hash table "fmT" populated during process 335. At process 639 the R_Mat is populated with "1"'s and "0"s where a 1 indicates that the repair procedure represented by the column ID is applicable to the corresponding FM represented by the row ID and are thereby connected in the HMS model.

At process 640, a loop is entered the populates the "E(j)_Mat" and the probabilistic matrices established in processes 618 and 621. At process 643, the row ID (e.g. an evidence level 1-4) is added to the "E(j)_Mat" matrix established at processes 615 and 618. At process 646, the row ID (e.g. an evidence level 1-4) are added to the probabilistic matrices pFE_mMat, pFE_itMat, pFE_fMat, pFE_coMat, pFA_mMat, pFA_itMat, pFA_fMat, and pFA_coMat. When the row ID's have been added then the matrix E(j)_Mat and the probabilistic matrices are populated in processes 649 and 652 by querying the HMS model. Querying a data base is known in the art and therefore not described further herein.

It should be noted that the matrix "E(j)_Mat" are equivalent to the conceptual matrices presented in Tables 1, 3 and 4, provided above. Thus, matrix "L(j)_Mat" will contain the evidence "signatures," the comparison of which will indicate whether or not an ambiguity exists as to the cause of a casualty.

At process 655, a static connectivity matrix "D_Mat" is established and populated from the hash tables "FM_evidence_T" and "evidence_FM_T" established at process 550 and 550, where the column IDs are the various evidence sources in all four levels and the row ID's are the FM's. When populated, the body of the matrix includes "1"s and "0"s where a 1 at a row/column intersection indicates that the evidence source will indict a particular FM. The D_Matrix is described as a static matrix because its information is a final product and is available for printing and other output purposes.

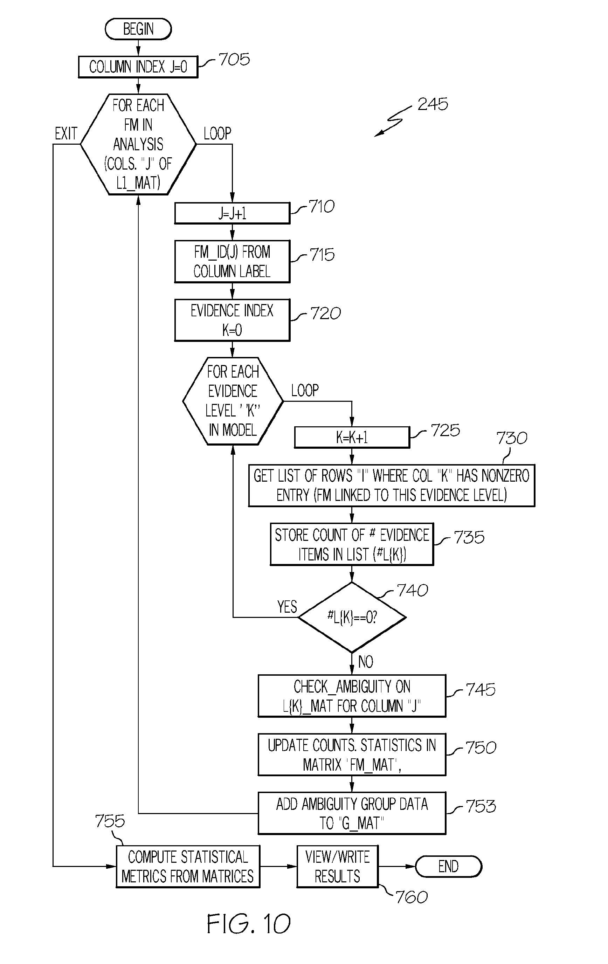

At process 658, the ambiguity matrix "G_Mat" is established. The ambiguity matrix is a matrix that lists and links all of the FM's against themselves. In other words, the Column ID's are the list of FM's retrieved from the HMS as are the Row ID's. As presented below in exemplary Table 5, the exemplary set of FMs 1-4 would have no ambiguity. In such a case no FM would be related to another FM. The G_Mat is populated during a subsequent analysis (See, FIG. 10)

**Table 5 - G_Mat with no Ambiguities**

| | FM1 | FM2 | FM3 | FM4 |
|---|---|---|---|---|
| FM1 | 1 | 0 | 0 | 0 |
| FM2 | 0 | 1 | 0 | 0 |
| FM3 | 0 | 0 | 1 | 0 |
| FM4 | 0 | 0 | 0 | 1 |

At process 661, the resultant "fm_Mat" matrix created at process 618 with column ID's being the various FMs is assigned its row ID's. the "fm_Mat" matrix is a final resultant matrix comprising the definitive diagnosability information concerning the HMS being tested. In one particular embodiment, a list of exemplary row ID's may include:
FM_Mat.rowslds[0]="L1" Automatic (i.e. monitor) evidence
FM_Mat.rowslds[1]="L2" Semi-Automatic Evidence (BIT)
FM_Mat.rowslds[2]="L3" Manual Test Evidence
FM_Mat.rowslds[3]="L4" Human Observation Evidence
FM_Mat.rowslds[4]="GL1" Ambiguity Group Size 1
FM_Mat.rowslds[5]="GL1-2" Ambiguity Group Size 1-2
FM_Mat.rowslds[6]="GL1-3" Ambiguity Group Size 1-3
FM_Mat.rowslds[7]="GL1-4" Ambiguity Group Size 1-4
FM_Mat.rowslds[8]="D" Diagnosable or NOT
FM_Mat.rowslds[9]="DR" Diagnosability Ratio
In this example, a "1" registering in Row [0] would indicate that a particular FM may be indicted as a causal FM by a particular level 1 automatic monitor/sensor 185/190. A "1" registering in row [1] would indicate that a particular FM may be indicted as a causal FM by a particular level 2 semi-automatic BIT. Row[2] would indicate that a particular FM may be indicted as a causal FM by a particular level 3 post mortem manual test. Similarly, Row [3] would indicate that a particular FM may be indicted as a causal FM by a particular level 4 observation by an operator either during operation or on a post mortem basis.

Rows [4-8] indicate in this exemplary embodiment the size of the ambiguity group to which a particular FM belongs. The larger the ambiguity group the less satisfying the complex system model in the HMS is, because the evidence being generated by the HMS is insufficient. Hence, it is preferable that all of the FM's in the "fm_Mat" matrix have a "1" registered in row [4] and "0"'s in rows 5-8. A "0" being registered in row [8] indicates that the particular FM cannot be diagnosed because disambiguation is not possible given the construct of the complex system model of the HMS. A FM is diagnosable if there exists an evidence set that when active indicts the FM.

Row [9] in this exemplary embodiment will register the diagnosability ratio for each particular FM. The diagnosability ratio may be calculated in any number of ways depending on its end usage. In a preferred embodiment the diagnosability ratio in row[9] is calculated as the percentage of failure modes in a subsystem or entire system under analysis that are unambiguously isolatable on the basis of evidence (Boolean diagnosability), or the average a posteriori probability of all failure modes in a subsystem or entire system under analysis on the basis of evidence, computed using Bayes' Theorem, or an arithmetic combination of the two.

FIG. 10 is a logic flow diagram of the process 245 that actually analyzes the complex system model in the HMS. At process 705, column index counter (j) is initialized to zero. At process 710, the method enters into a loop and the column index counter (j) is incremented by one. At process 715, a first FM is retrieved from the hash table FM_ID that was created during processes 325-3335 of FIG. 6.

At process 720, an evidence level counter (k) is set to zero. At process 725, the method enters into a second nested loop and the evidence level counter (k) is incremented by one.

At process 730, a count of the number of level 1 evidence objects (i.e. automatic monitors) that indict the selected FM is made from the hash tables "FM_evidence_T" and "evidence_FM_T," which were created at process 550 and 555 of FIG. 8. The count of evidence items then populates a convenience table (#L{k}) at process 735. For example, at the intersection of column FM1 and L1 there may register three (3) monitors that indict FM1.

At decision point 740, it is determined whether or not the level 1 evidence count for FM1 has been completed (i.e. k = 4). If the result is "no" then the method loops back to process where the evidence level counter is incremented by one and the hash tables are examined for level 2 evidence (i.e. BIT), and so forth.

If decision point 740 indicates that all levels of evidence has been counted then the process progresses to process 745 where an ambiguity check is executed for the FM being examined. This check is accomplished by examining the matrix "L(k)_Mat" populated at process 649 for identical signatures to those of FM1 at each level of evidence 1-4). The issue here is which levels of evidence are required to provide a unique signature. At process 750, the matrix "FM_Mat" is updated with the evident count statistics and the ambiguity group tables.

At process 755 statistical reporting metrics are calculated from the various matrices "FM_Mat", "G_Mat," "R_Mat", etc. and reported at process 760.

Some exemplary reporting statistics that may be determined include various diagnosability ratios such as the percentage of FMs that are strictly diagnosable where they are in their own single FM ambiguity group, the percentage of FMs diagnosable to an ambiguity group of 2 FMs, the percentage of FMs diagnosable to an ambiguity group of 3 or fewer FMs. A FM detectability ratio may also be computed. The detectability ratio may be calculated as the maximum co-occurrence count (See processes 350,355) for a FM that produces certain evidence divided by a normalization factor that is the cardinality of all FMs in a given sub-system/system. The detectability ratio assumes that the FM has occurred and has produced the observed evidence.

A resolution to repairs analysis may also be run. To do so, a discrete diagnosability analysis is run on a particular sub-system followed by a repairs analysis using the remaining ambiguity groups as a starting point. It is assumed that the disambiguated failure modes from the discrete analysis provide immediate information as to the appropriate repair actions from the maintainer's perspective. Resolution to repairs diagnosability is reported at the sub-system level as a fraction of all FMs in the sub-system. The numerator of the first level repair analysis may be computed as the sum of the number of fully disambiguated FMs, the number of single repair FMs and the number of identical "repair signature" FMs. Identical repair signatures implies that performing a repair will cure all associated FMs.

A second level repair analysis may utilize a numerator that includes the numerator form the first level analysis, above, and add to it the number of repair ambiguity groups with a size of two. Similarly, an third level repair analysis may include a numerator that includes the numerator form the second level analysis and adds to it the number of repair ambiguity groups of size three or less without double counting.

Another set of exemplary statistics reported include the probabilistic diagnosability, computed using Bayes' Theorem, representing the average a posteriori probability of (1) a single failure mode, (2) all failure modes in a subsystem or (3) all failure modes in an entire system on the basis of evidence. A "diagnosability ratio" is calculated using a mixed Boolean and Bayesian probability model. Diagnosability is computed incrementally by evidence type. For example, diagnosability resulting from the use of dedicated monitors only is calculated. Following that, the diagnosability resulting from the combined use of dedicated monitors and BIT is calculated. This is followed by diagnosability resulting from the combined use of dedicated monitors, BIT and post casualty testing, followed by diagnosability resulting from the combined use of the previous three and with human observations. Diagnosability is preferred to be as close to unity (i.e. 100%) as possible.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method for determining fault diagnosability of a health monitoring software (HMS) application for a complex system, comprising:
extracting data from the HMS application data containing a relationship between one or more failure modes (FMs) for a plurality of components of the complex system and one or more evidence items generated in relation to the complex system, the a priori probabilities of each failure mode occurring, and the a priori probability of each evidence item occurring;
creating one or more matrices relating the one or more FMs to the one or more evidence items;
analyzing the one or more matrices, the a priori probabilities of each failure mode occurring, and the a priori probability of each evidence item occurring to determine the diagnosability of the one or more FMs including:
each FM that cannot be indicted by one of the plurality of evidence items,
each FM that shares an identical evidence signature with another FM,
each FM with a unique evidence signature, and
a posteriori probability for each FM that it is active given a related set of evidence items; and
generating a report indicating those components of the plurality of components that have failure modes that cannot be unambiguously indicted as a cause of a casualty to the complex system.

2. The method of claim 1, wherein the data includes the probability of an evidence item occurring given the related FM is not active.

3. The method of claim 2, wherein the data includes the probability of an evidence item occurring given that the related FM is active.

4. The method of claim 2, further comprising the step of incrementally determining the diagnosability of each FM relative to at least one of a plurality of defined classifications of evidence items.

5. The method of claim 4 wherein the plurality of defined classifications includes evidence based upon signals generated directly by a complex system component, evidence generated by manual inspection, evidence generated by loss of a normal function of the complex system and evidence resulting from manual observation of physical characteristics of the component of the complex system.

6. The method of claim 4, further comprising determining the diagnosability of each FM by a signal generated directly by a component of a complex system.

7. The method of claim 6, wherein multiple active FMs are assumed.

8. The method of claim 7, further comprising determining the diagnosability of each FM by a manual inspection.

9. The method of claim 8, further comprising determining the diagnosability by loss of a normal function of the complex system.

10. The method of claim 9, further comprising determining the diagnosability by a manual observation of physical characteristics of the component of the complex system.

11. The method of claim 10, further comprising generating notification information identifying a subset of the one or more FMs comprising an ambiguity group based at least in part on a shared matrix signature.

12. An apparatus for determining fault diagnosability of a health monitoring software application for a complex system, comprising:
a data storage device containing a model of a complex system recorded therein; and
a computing device configured to analyze the model of the complex system by executing a plurality of instructions that:
extract data from the model of the complex system, the data containing a relationship between one or more failure modes (FMs) of the complex system and one or more evidence items of the complex system, the a priori probabilities of each failure mode occurring, and the a priori probability of each evidence item occurring;
create one or more matrices relating the one or more FMs to the one or more evidence items; and
analyze the one or more matrices, the a priori probabilities of each failure mode occurring, and the a priori probability of each evidence item conditional on the existence of each FM to compute the diagnosability of each FM.

13. The apparatus of claim 18, wherein the data containing a relationship between one or more FMs to one or more evidence items includes the probability of false alarm, which is the probability of an evidence item occurring given the related FM is not active.

14. The apparatus of claim 19, wherein the diagnosability of each FM is determined incrementally relative to at least one of a plurality of defined classifications of evidence items.
